# EUROPEAN PATENT SPECIFICATION

(11) **EP 3 408 929 B1**
(45) Date of publication and mention of the grant of the patent: **20.07.2022**
(21) Application number: 17701534.4
(22) Date of filing: 27.01.2017
(51) Int. Cl.: H02M 1/12, H02M 5/458, H02M 7/493, H02M 7/5387, H02J 3/01

(54) **ELECTRICAL CONVERTER SYSTEM WITH LOW HARMONIC DISTORTION**
STROMWANDLERSYSTEM MIT NIEDRIGER HARMONISCHER VERZERRUNG
SYSTÈME DE CONVERTISSEUR ÉLECTRIQUE À FAIBLE DISTORSION HARMONIQUE

(30) Priority: 28.01.2016 EP 16153074
(43) Date of publication of application: 05.12.2018
(73) Proprietor: ABB Schweiz AG, 5400 Baden (CH)
(72) Inventor: ECKERLE, John, 4058 Basel (CH); BENSCH, Christian, 5324 Full-Reuenthal (CH)
(74) Representative: Qip Patentanwälte Dr. Kuehn & Partner mbB
(86) International application number: PCT/EP2017/051808
(87) International publication number: WO 2017/129766

(56) References cited:
- US-A- 5 886 888
- US-A1- 2009 045 782
- US-A1- 2012 019 007

## Description

### FIELD OF THE INVENTION

The invention relates to an electrical converter system and to a method for generating an output voltage with a specific harmonic distortion.

### BACKGROUND OF THE INVENTION

Electrical converter systems, and in particular high power converter systems, are used in many technical fields, such as electrical power generation and electrical power conversion. For example, electrically energy produced by a generator may be converted into electrical energy that may be supplied to a large-scale distribution grid. Such converter systems usually convert a voltage of a first frequency to a voltage of a second frequency.

However, during frequency conversion, usually voltages with higher harmonics are created, since no perfect sinusoidal but only stepped voltages may be created. These harmonics may have unwanted effects on the distribution grid and may have to be kept below defined limits. Usually, to reach these limits, electrical line filter circuits are used, which may be expansive and heavy.

DE 4241647 C1 and EP 2 469 692 A1 relate to methods employing optimized pulse patterns for controlling an electrical converter.

US 2009/0045782 A1 shows a power conversion system with two subconverters connected to a transformer with two secondary windings.

US 5 886 888 shows a power converter system, which is adapted to reduce higher harmonic defects.

US 2012/0019007 A1 relates to a method for minimizing harmonic currents in a wind turbine park.

### DESCRIPTION OF THE INVENTION

It is an objective of the invention to provide a simple and economic electrical converter system producing low harmonic distortion.

This objective is achieved by the subject-matter of the independent claims. Further exemplary embodiments are evident from the dependent claims and the following description.

A first aspect of the invention relates to an electrical converter system, which may be a medium voltage system. The converter system may be used for converting a voltage of first (fundamental) frequency from an electrical generator into a voltage of second (fundamental) frequency supplied to a distribution grid. The second fundamental frequency may be 50 Hz or 60 Hz. For example, the generator may be driven by a wind turbine and/or the electrical converter system may be a part of a wind energy park.

However, it also may be possible that the converter system is used for supplying an electrical motor (supplied with a voltage of the first frequency converted from a voltage of the second frequency from the distribution grid).

According to an embodiment of the invention, the electrical converter system comprises an electrical converter for converting an input voltage into a multi-phase converter output voltage, a transformer interconnected with the electrical converter at a secondary side and for transforming the multi-phase converter output voltage into a multi-phase transformer output voltage at a primary side and a controller adapted for switching the electrical converter with optimized pulse patterns, such that the electrical converter produces the multi-phase converter output voltage with a fundamental frequency and a series of harmonics.

In other words, the electrical converter system comprises a controllable electrical converter, which under the control of the controller is switched with optimized pulse patterns to convert an input voltage (for example provided by a generator) into a multi-phase converter output voltage. For example, the input voltage may be a three-phase voltage and the multi-phase converter output voltage may be a voltage with a multiple of three phases (such as 3, 6, 9, etc. phases). The electrical converter may be a converter with at least one rectifier, at least one DC link and at least one inverter. It may be possible that the inverter and/or the rectifier are controlled by the controller with the optimized pulse patterns. However, it also may be possible that the electrical converter is a direct converter, comprising converter cells with internal cell capacitors.

As the electrical converter is not able to produce an exactly sinusoidal output voltage, the output voltage may comprise higher order harmonics or "harmonics", which may be a multiple of the fundamental frequency, i.e. the frequency of the desired sinusoidal output voltage.

The multi-phase converter output voltage is supplied to a transformer, which transforms it into a multi-phase output voltage, which may have a higher or lower voltage magnitude. As will be explained in more detail below, the transformers being a real and not an ideal transformer may have a frequency-specific damping behaviour and/or may damp harmonics at higher frequencies stronger than at lower frequencies.

In particular, the transformer has a damping behaviour like a low pass filter between the secondary side and the primary side. Between the secondary side and the primary side, the transformer is adapted for damping frequency in an upper frequency range higher than frequencies in a lower frequency range. The lower frequency range may have frequencies lower than the upper frequency range. For example, the transformer may behave like a low pass filter for voltages transformed from low voltage (secondary side) to high voltage (primary side).

This is considered by the optimized pulse patterns. The optimized pulse patterns are optimized considering a frequency damping behaviour of the transformer, such that converter output magnitudes of specific harmonics at the secondary side are higher than predefined threshold magnitudes for the specific frequencies and transformer output magnitudes of the specific harmonics at the primary side, which are damped by the transformer, are lower than the predefined threshold magnitudes. In particular, the optimized pulse patterns are optimized such that the converter output magnitudes of harmonics in the upper frequency range are higher than those of harmonics in the lower frequency range. In such a way, the damping behaviour of the transformer may be considered by optimizing the optimized pulse patterns, although the threshold magnitudes in the higher frequency range may be lower as the threshold magnitudes in the lower frequency range.

In Summary, the converter output magnitudes for harmonics may have to be damped by the optimized pulse patterns. Above the filter frequency, the magnitudes for harmonics may be damped by the transformer. In particular, the harmonics in the higher frequency range may be higher as the harmonics in the lower frequency range at the secondary side and/or the harmonics in the higher frequency range may be lower as the harmonics in the lower frequency range at the primary side.An optimized pulse pattern may be a series of switching transitions that may be applied regularly (with a specific frequency) to the electrical converter, such that the electrical converter produces the desired output voltage. Based on one or more reference values, such as a torque, an output power, an input frequency, etc., the controller chooses the appropriate optimized pulse pattern and applies it to the converter.

The optimized pulse pattern may be optimized offline, i.e. the series of switching transitions may have been optimized with respect to several optimization goals, before the controller is operating. For example, the optimized pulse patterns may be stored in a look-up table in the controller and/or may be accessed based on the one or more control parameters.

In particular, the optimized pulse patterns may have been optimized with respect to converter output magnitudes of solely specific harmonics, i.e. the harmonics in the upper frequency range. It has to be understood that a magnitude of a specific harmonic may be the maximal possible value of the voltage at the specific harmonic. For example, the magnitude of the fundamental frequency maybe set to 1 and the magnitudes of the specific harmonics may be given in percent of the magnitude of the fundamental frequency. During optimization of the optimized pulse patterns it is possible to limit the magnitude of a specific harmonic produced by the converter to a threshold magnitude.

For example, the optimization may be performed in such a way, that specific lower harmonics have lower converter output magnitudes as specific higher harmonics.

The frequency-dependent damping behaviour of the transformer may be now considered in such a way, that a converter output magnitude for specific harmonic produced by the optimized pulse patterns at an output of the converter is higher than a predefined threshold magnitude for the harmonic, but is damped by the transformer below the threshold magnitude, i.e. to a transformer output magnitude at the primary side of the transformer.

Since the transformer may act as a low pass filter and/or may damp specific frequencies stronger as other frequencies, the optimized pulse pattern, which have been optimized in such a way, may result in an output voltage of the transformer and/or the electrical converter system, with output magnitudes lower than demanded threshold magnitudes, without the need for a line filter or with only a small line filter.

The threshold magnitudes may be provided by a standard of the grid, to which the transformer is connected. For example, specific grid providers demand that an electrical machine connected to the grid does not produce higher order harmonics as the frequency specific threshold magnitudes described by the standard. In such a way, the standard may be met without the need for a big line filter or a line filter at all.

In summary, optimized pulse patterns designed based on a real transformer, which may be used as a low pass filter to replace a harmonic line filter, may result in less hardware components, in cost, space and weight saving, in less installation, commissioning and servicing effort.

According to an embodiment of the invention, for each harmonic in the upper frequency range, a difference between the transformer output magnitude and the threshold magnitude is smaller than 5 % or 1 % of the transformer output magnitude. The optimized pulse patterns may be optimized in such a way, that the magnitudes of the harmonics at the output of the electrical converter system are only a small amount below the desired threshold magnitudes.

According to an embodiment of the invention, the electrical converter is connected to at least two secondary winding systems of the transformer, wherein the controller is adapted to switch the electrical converter, such that harmonics in the multi-phase converter output voltage cancel each other in the secondary side of the transformer. The electrical converter may have more than three output phases and, for example, may be a 12-pulse converter. Also, the transformer may be a 12-pulse transformer. Each secondary winding system may comprise windings that are electrically connected with each other, for example via a star- or delta-connection. Different secondary winding systems may be electrically isolated from each other.

According to an embodiment of the invention, the electrical converter is connected to one secondary winding system of the transformer and the controller is adapted to switch the electrical converter, such that harmonics in a multi-phase converter output voltage are reduced by additional voltage levels. In this case, the transformer may have an open secondary winding system with phases electrically isolated from each other. Furthermore, each phase of this secondary winding system may comprise only one winding.

For example, for three phases, the transformer may have 6 terminals on the secondary side. When the converter has two inverters at its output, then each phase of a first inverter may be connected to the same phase of the second inverter via the corresponding phase of the open secondary winding system.

In general, the secondary winding systems (or the phases of the secondary winding system) of the transformer may be connected or arranged, such that they have a phase shift with respect to each other and cancel specific harmonics in different secondary winding systems. These harmonics that may be produced with an electrical converter of a special topology may have an arbitrary magnitude and/or may not have to be considered by optimizing the optimized pulse patterns.

Due to the transformer topology, magnetic fluxes generated in the transformer by different secondary winding systems based on two harmonics at the secondary side may cancel each other and a corresponding current generated in the primary winding system is damped. In this context one may say that the two harmonics have cancelled each other in the secondary side of the transformer.

In other words, a first set of harmonics may be damped due to the transformer topology and a second set of harmonics (which may be the remaining harmonics) may be damped by the filter behaviour of the transformer between the secondary and the primary side.

As a specific example, the combination of a filter effect of a transformer, a 12-pulse topology of the converter and the optimized pulse patterns optimized as described above and below may be used to keep the magnitudes of all harmonics within the specified threshold magnitudes without additional hardware filter components.

According to an embodiment of the invention, harmonics with a multiple of 6k±1 of the fundamental frequency cancel each other in the secondary side of the transformer, where k is an odd natural number. In general, an electrical converter with a multiple of three output phases, which are phase shifted by 120° with respect to each other, will produce harmonics, which are a multiple of 6k±1 of the fundamental frequency. In this case, two secondary winding systems (or the phases of one winding system) phase shifted by 30° may cancel the harmonics with k uneven, i.e. 5/7 (k=1), 17/19 (k=3), 29/31 (k=5), 41/43 (k=7), etc.

According to an embodiment of the invention, specific harmonics, which magnitudes are optimized to the transformer damping behaviour, are a multiple of 6k±1 of the fundamental frequency, where k is an even natural number. The remaining harmonics, i.e. 11/13 (k=2), 23/25 (k=4), 35/37 (k=6), 47/49), etc., may be suppressed below their threshold magnitudes by the transformer, when the optimized pulse patterns are optimized accordingly.

According to an embodiment of the invention, only specific harmonics below a threshold frequency are optimized to the transformer damping behaviour. In general, it may be possible that not all harmonics are damped below their threshold magnitudes by the combination of converter and transformer. The remaining harmonics, which are above their threshold magnitudes at the output of the transformer, may be further damped with a further electrical (line) filter, which, however, may be designed smaller than an electrical filter, which has to damp all harmonics.

According to an embodiment of the invention, only specific harmonics not cancelled in the secondary side of the transformer are optimized to the transformer damping behaviour. For example, the optimized pulse patterns may be optimized in such a way that the harmonics cancelled in the secondary side are as high as possible. Harmonics of other orders may be dampened by the low pass filter effect of the transformer.

According to an embodiment of the invention, the electrical converter comprises two subconverters connected to the secondary side, i.e. to one or more secondary winding systems of the transformer. The controller may be adapted to switch the subconverters, such that their output voltages are phase shifted by 30°. In such a way, specific harmonics may be cancelled due to secondary winding system(s) of the transformer, for example as described above.

According to an embodiment of the invention, each subconverter comprises a rectifier, a DC link and a transformer side inverter. In other words, the electrical converter may comprise at least two indirect subconverters connected to the secondary side winding system(s) of the transformer.

According to an embodiment of the invention, the electrical converter comprises two transformer side inverters connected in parallel to a common DC link, which is connected to a common rectifier. It also may be possible that only one rectifier for two inverters is used.

A further aspect of the invention relates to a method for generating an output voltage with a specific harmonic distortion. The method may be performed with the electrical converter system as described above and below.

According to an embodiment of the invention, the method comprises: switching an electrical converter with optimized pulse patterns, such that the electrical converter produces a converter output voltage with a fundamental frequency and a series of harmonics having specific magnitudes; and supplying the converter output voltage to a transformer, which transforms the converter output voltage into the output voltage and which has a frequency damping behaviour like a low pass filter between the secondary side and the primary side, which frequency-specific damps the converter output voltage, thus damping converter output magnitudes of harmonics in an upper frequency range stronger than in a lower frequency range.

The optimized pulse patterns are optimized, such that the converter output magnitudes of harmonics in the upper frequency range are higher than those of harmonics in the lower frequency range and such that converter output magnitudes of specific harmonics in the upper frequency range at the secondary side of the transformer are higher than predefined threshold magnitudes for the specific frequencies and transformer output magnitudes of the specific harmonics in the upper frequency range at the primary side of the transformer are lower than the predefined threshold magnitudes.

According to an embodiment of the invention, the electrical converter is connected to at least two secondary winding systems of the transformer and the controller is adapted to switch the electrical converter, such that harmonics in a multi-phase converter output voltage cancel each other in the secondary side, wherein only specific harmonics not cancelled in the secondary side of the transformer are optimized to the transformer damping behaviour.

According to an embodiment of the invention, the electrical converter is connected to one secondary winding system of the transformer and the controller is adapted to switch the electrical converter, such that harmonics in a multi-phase converter output voltage are reduced by additional voltage levels, wherein the transformer has an open secondary winding system with phases electrically isolated from each other and wherein only specific harmonics not cancelled in the secondary side by the open winding system of the transformer are optimized to the transformer damping behaviour.

A further aspect of the invention relates to a use of a combination of a transformer and optimized pulse patterns for generating an output voltage with a specific harmonic distortion, wherein the optimized pulse patterns, which are applied to an electrical converter, are adapted to a damping behaviour of the transformer, which is connected to the electrical converter. An already present transformer may be used like a low pass filter in combination with optimized pulse patterns for the best suppression of harmonics. The optimized pulse pattern may consider the frequency behaviour of a transformer. Optionally, the optimized pulse patterns may consider a harmonic elimination of voltages of a transformer vector group, for example, when then the transformer is a 12-pulse transformer.

It has to be understood that features of the method and the use as described in the above and in the following may be features of the system as described in the above and in the following and vice versa.

These and other aspects of the invention will be apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1 schematically shows an electrical converter system according to an embodiment of the invention.
Fig. 2 shows a diagram with a damping behaviour of a transformer used in an electrical converter system according to an embodiment of the invention.
Fig. 3 schematically shows an electrical converter for an electrical converter system according to an embodiment of the invention.
Fig. 4 schematically shows an electrical converter for an electrical converter system according to an embodiment of the invention.
Fig. 5 schematically shows an electrical converter for an electrical converter system according to an embodiment of the invention.
Fig. 6 schematically shows an electrical converter for an electrical converter system according to an embodiment of the invention.
Fig. 7 shows a diagram with a harmonic spectrum of a converter output voltage produced with an electrical converter system according to an embodiment of the invention.
Fig. 8 shows a diagram with a harmonic spectrums of a transformer output voltage produced with an electrical converter system according to an embodiment of the invention.
Fig. 9 shows a diagram with a harmonic spectrum of a transformer output voltage produced with an electrical converter system according to an embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

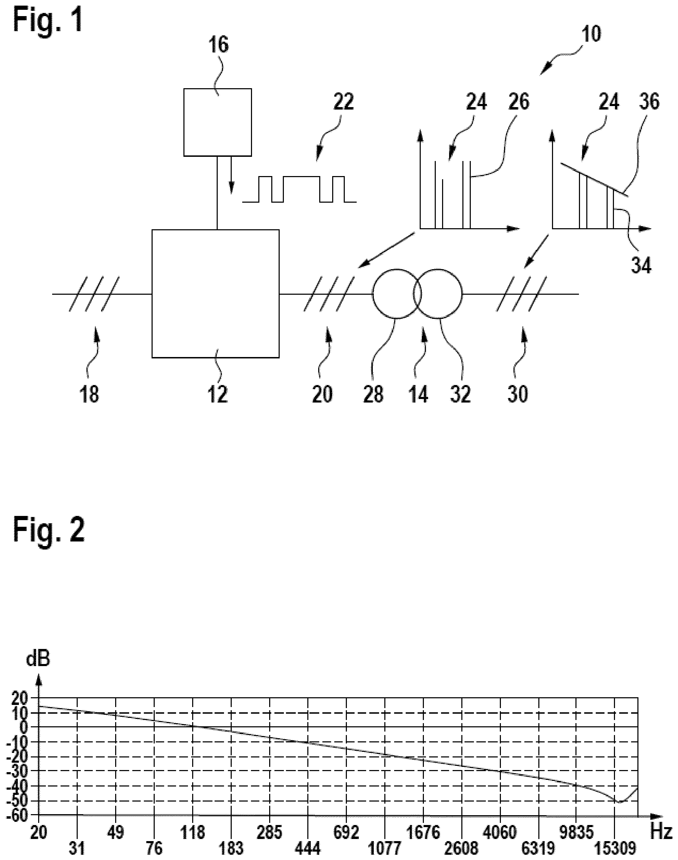

Fig. 1 shows an electrical converter system 10, which comprises an electrical converter 12, a transformer 14 connected to an output of the electrical converter 12 and a controller 16 for controlling the electrical converter 12. For example, the converter system 10 may be used for converting an input voltage 18, for example provided by a generator, supplied to an input of the converter 12, to a converter output voltage 20. The input voltage 18 and the converter output voltage 20 may have different fundamental frequencies.

For producing the output voltage 20, the converter 12 is switched by the controller 16 with optimized pulse patterns 22. The controller 16 receives specific reference values (such as a torque, output current, power flow, etc.), selects a specific optimized pulse pattern 22, which may be stored in the controller 16 and applies this optimized pulse pattern 22 regularly as long to the converter 12, until the control parameters demand another optimized pulse pattern 22.

It has to be noted that the converter 12 not only produces a pure sinusoidal output voltage 20, but a converter output voltage 20 that besides the fundamental frequency comprises harmonics 24, which have different converter output magnitudes 26. The converter output magnitude 26 of a harmonic 24 may be seen as the Fourier coefficient of the converter output voltage 20 at the harmonic 24.

The height of the output magnitudes 26 may be adjusted by differently optimizing the optimized pulse patterns 22. For example, an optimization goal of the optimization process may be to keep at least some of the magnitudes 26 below a specific threshold, while minimizing the switching frequency, a deviation from a rated voltage, etc.

The converter output voltage is supplied to a secondary side 28 of the transformer 14, which transforms the converter output voltage 20 into a transformer output voltage 30 provided at a primary side 32 of the transformer 14. For example, the transformer output voltage 30 may be supplied to a large-scale distribution grid.

The transformer 14 may change the voltage between the converter output voltage at its input (secondary side 28) and the transformer output voltage at its output (primary side 32), but not the frequency. Since the transformer 14 is not an ideal but a real transformer comprising inner resistances and capacities, the transformer 14 has a frequency dependent damping behaviour. Therefore, the transformer output voltage 30 comprises the same harmonics 24 as the converter output voltage 20 (at least in the case when all harmonics 24 are not completely damped) but with different transformer output magnitudes 34.

Fig. 2 shows a diagram with a measurement of the damping behaviour of a real transformer 14. The diagram shows that the higher frequencies are damped significantly like by a low pass filter. The nominal transformer ratio may be only valid for the nominal frequency (in this example 16 Hz)

This damping behaviour of the transformer 14 in combination with specifically optimized pulse patterns 22 may be used to generate a transformer output voltage 30, i.e. an output voltage 30 of the converter system 10 which only has harmonics 24 or at least has a number of specific harmonics 24 below a predefined threshold 36.

In particular, for every or at least some of the harmonics 24, there may be threshold magnitudes 36 defined, which limit the maximal value of the magnitude 34 of the harmonics 24 of the output voltage 30. For example, standards demand that the harmonics introduced by the system 10 into a distribution grid should stay below frequency dependent threshold magnitudes 36.

During the optimization of the optimized pulse patterns 22, the damping behaviour of the transformer 14 may be taken into consideration. Since the transformer 14 damps at least some of the harmonics 24, for example the higher order frequencies, these harmonics 24 may have a converter output magnitude 26 higher than their threshold magnitude 36. The transformer 14 then may damp them to the transformer output magnitudes 26 below their respective threshold magnitude 36.

In such a way, the system 10 does not need a line filter for damping harmonics 24 produced by the converter 12. In another case, it also may be possible to use a small line filter, since the combination of the optimized pulse patterns 22 and the transformer 14 already has produced rather small transformer output magnitudes 34.

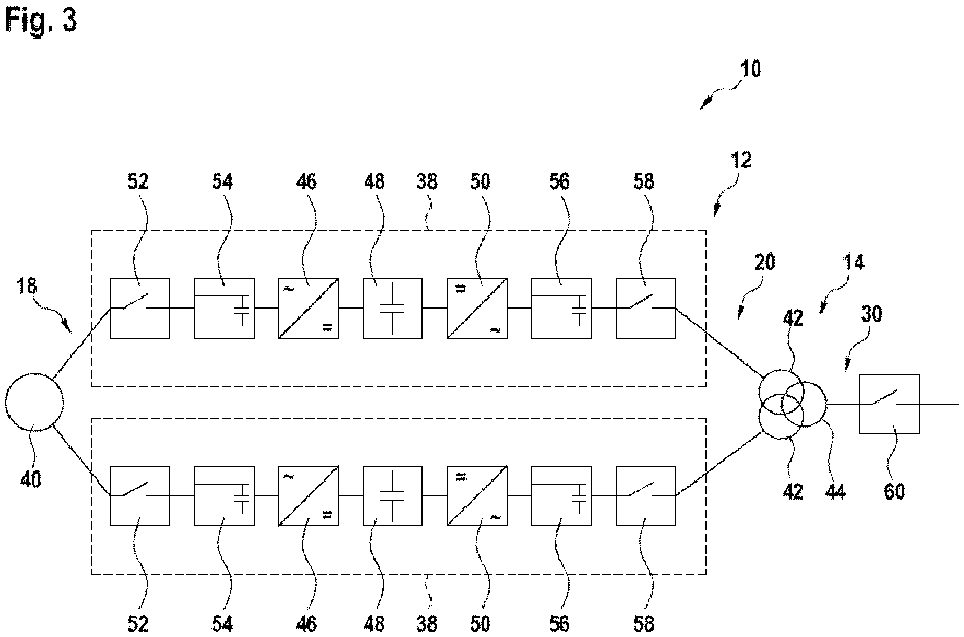

Based on the topology of the converter 12 and the transformer 14, it is also possible to additionally eliminate specific harmonics 24 at the secondary side of the transformer 14. Such topologies are shown in Fig. 3 to 6. It has to be understood that elimination or cancellation of a harmonic 24 may mean that its transformer output magnitude may be below 0.01 % or below 0.001 % of the magnitude of the fundamental frequency.

Fig. 3 shows a converter 12 with two subconverters 38, which may be seen as two different conversion lines, connected to a generator 40 and to the transformer 14. The transformer 14 has two secondary winding systems 42 and one primary winding system 44, wherein the secondary winding systems 42 have a phase shift of 30°. It is possible that the secondary winding systems 42 of the transformer 14 as well as the primary winding system 44 are star-connected or delta connected.

Each of the subconverters 38 may comprise a (generator-side) rectifier 46, a DC link 48 and an (grid-side) inverter 50, which are cascade connected. Furthermore, each of the subconverters 38 may comprise a generator-side disconnector 52 and a generator-side dv/dt filter 54 as well as a grid-side disconnector 58 and a grid-side dv/dt filter 56.

There also may be a disconnector 60 for disconnecting the transformer from the grid.

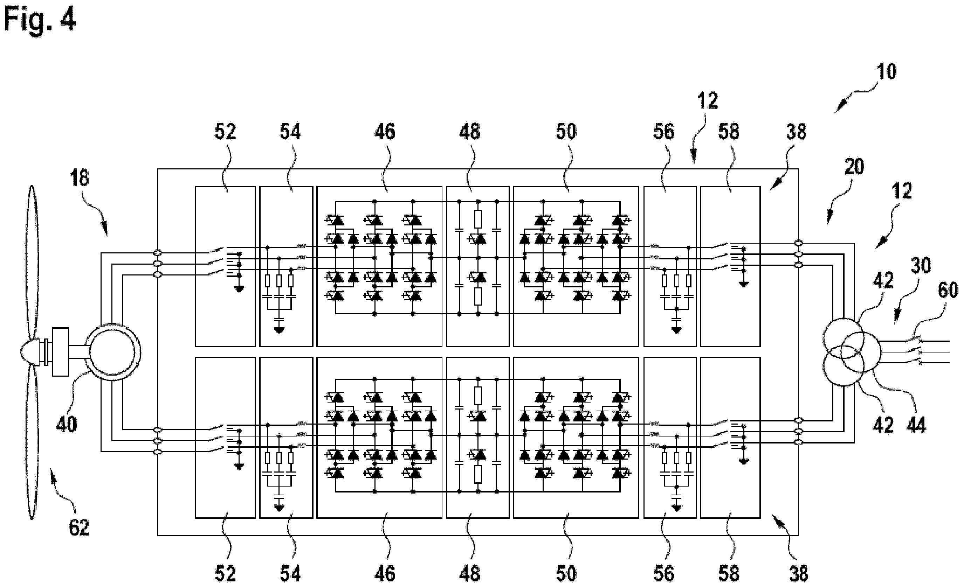

Fig. 4 shows an example of the topology of Fig. 3. The generator 40 may be driven by a wind turbine 62, i.e. the system 10 may be part of a wind park. Each of the subconverters 38 are supplied with a three-phase input voltage 18 from the generator 40. Each of the subconverters 38 generate a three-phase output voltage 20, which is supplied to one of the secondary winding systems 42. The transformer 14 also produces a three-phase output voltage 30, which may be supplied to a wind park grid.

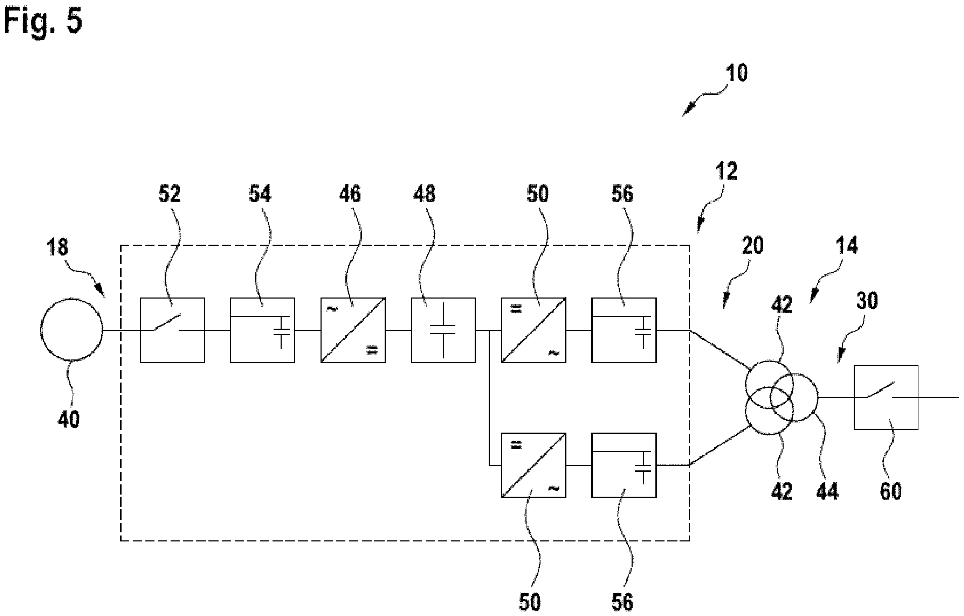

Fig. 5 shows an alternative topology with common rectifier 46 and common DC link 48. Two grid-side inverters 50, which are connected to the secondary winding systems 42 of the transformer 14, are connected to the common DC link 48, which is supplied via the common rectifier 46 from the generator 40. Each inverter 50 may be connected with a secondary windings system 42 that is star- or delta-connected.

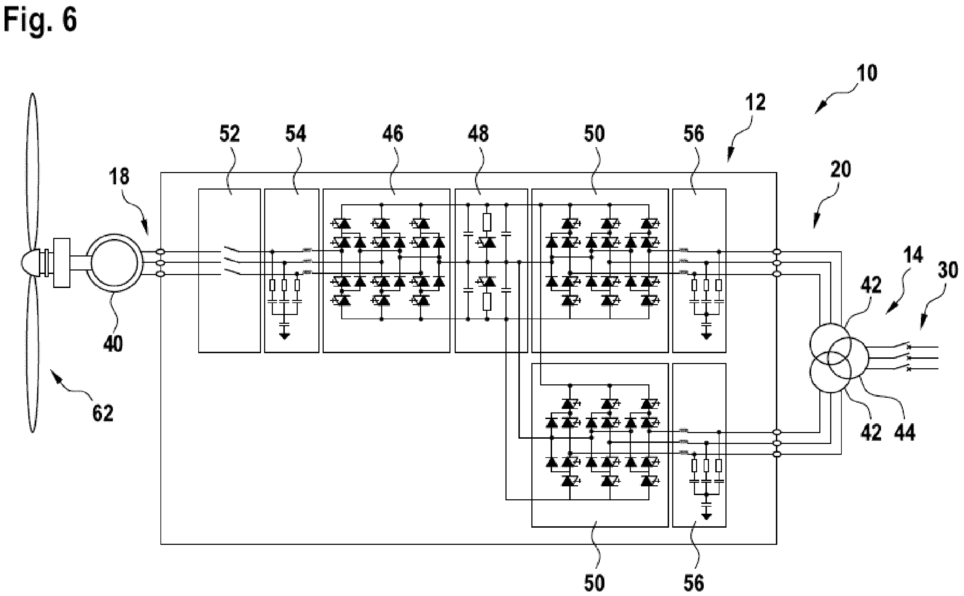

Fig. 6 shows an example of the topology of Fig. 5. The rectifier 46 is supplied with a three-phase input voltage 18 from the generator 40, whereas each of the inverters 50 produces a three-phase converter output voltage 20 for each of the secondary winding systems 42.

It also may be possible that the transformer 14 shown in Fig. 5 and 6 has an open secondary winding system 42 with phases, which are electrically isolated from each other. In this case, each phase of the first inverter 50 may be connected via a respective phase of the secondary winding system 42 with the corresponding phase of the second inverter 50. Also this topology may cancel harmonics on the secondary side of the transformer 14. It has to be noted that this topology also may be used together with the systems 10 shown in the other figures, when applicable.

In all topologies shown in Fig. 3 to 6, the inverters 50 and/or the rectifier(s) 46 may comprise three neutral point clamped half-bridges, which may be switched by the controller 16. The inverters 50 and optionally the rectifier(s) may be switched based on the optimized pulse patterns 22.

In all topologies with at least two secondary windings 42 shown in Fig. 3 to 6, the converter 12 may be seen as a 12-pulse converter and the transformer 14 may be seen as 12-pulse transformer.

In general, three phase rectifiers 46 and/or inverters 40 produce harmonics 24 that are a multiple of 6k±1 the fundamental frequency, where k is a natural number. The topologies shown in Fig. 3 to 6 eliminate harmonics 24 for k an uneven number, i.e. 5, 7, 17, 19, 29, 31, 41, 43, etc., since these cancel each other due to the phase shifted secondary winding systems 42.

Thus, in these topologies, only the harmonics 24 that are a multiple of 6k±1, where k is an even number, i.e. 11, 13, 23, 25, 35, 37, 47, 49, etc., have to be considered for damping by the frequency dependent damping behaviour of the transformer 14 (see Fig. 2). For example, the optimized pulse patterns 22 may be optimized in such a way, that the harmonics 24 for k uneven are not considered and only the converter output magnitudes 26 for harmonics 24 with k even are adapted to the damping behaviour of the transformer 14.

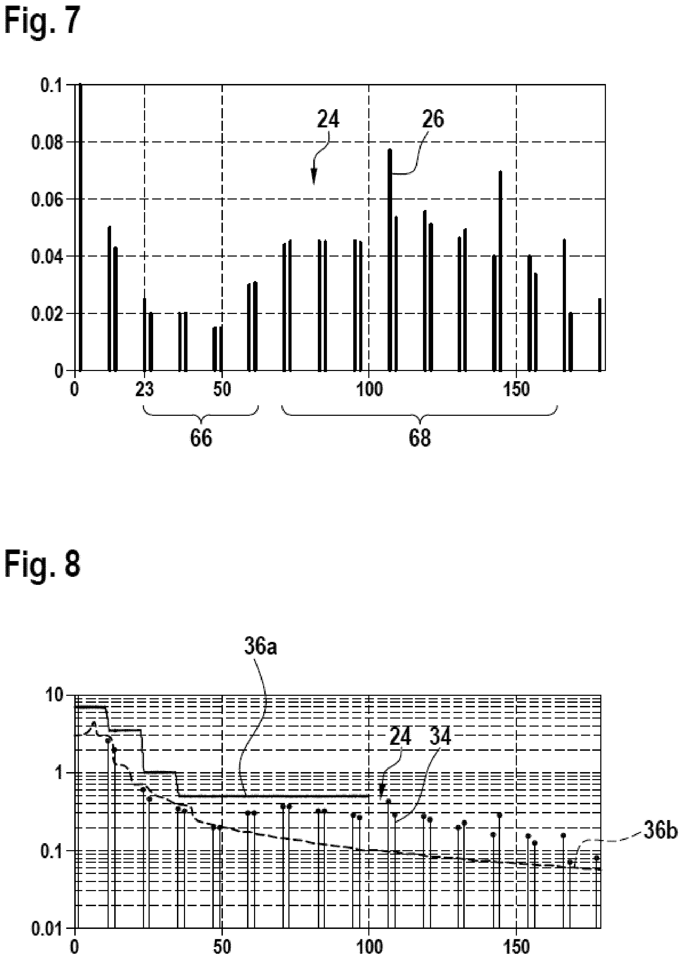

Fig. 7 to 9 show diagrams with converter output magnitudes 26, 34 produced by a converter 12 with topology described in one of the Fig. 3 to 6, when switched with such optimized pulse patterns 22.

In Fig. 7, only the harmonics 24 with k even are shown (on the x-axis, the multiple (6k±1) of the harmonic 24 with respect to fundamental frequency is depicted). This multiple has to be multiplied with the fundamental frequency (such as 50 Hz or 60 Hz) to calculate the frequency in Hz of the respective harmonic 24.

As shown in Fig. 7, in a first, lower frequency range 66, the converter output magnitudes 26 (where they will be damped less by the transformer 14) are lower than in a second, higher frequency range 68 (where they will be damped stronger by the transformer).

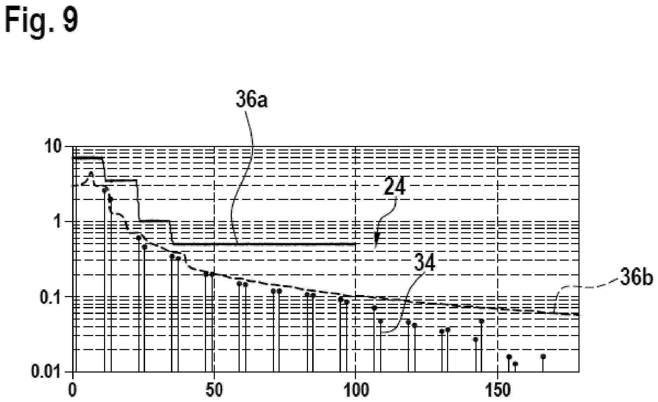

Fig. 8 and 9 show diagrams with transformer output magnitudes 34 with differently damping transformers. Furthermore, Fig. 8 and 9 show threshold magnitudes 36a, 36b provided by the standards according to BDEWand IEEE519.

In Fig. 8, the combination of transformer and optimized pulse patterns 22 results in a damping, which is sufficient for threshold magnitudes 36a. The optimized pulse patterns 22 have been optimized such that the magnitudes 34 up to a multiple (based on even k) of 49 of the fundamental frequency are shortly below the threshold magnitudes 36b. The higher order harmonics 24 may be damped with a further line filter.

In Fig. 9, the combination of transformer and optimized pulse patterns 22 results in a damping, which is sufficient for both threshold magnitudes 36a, 36b. The optimized pulse patterns 22 have been optimized such that the magnitudes 34 for all multiples (based on even k) of the fundamental frequency are shortly below the threshold magnitudes 36b. In this case, the converter system 10 does not need a line filter at all to comply with e.g. the standards BDEW and IEEE519.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims.

### LIST OF REFERENCE SYMBOLS

- 10: electrical converter system
- 12: electrical converter
- 14: transformer
- 16: controller
- 18: input voltage (generator voltage)
- 20: converter output voltage
- 22: optimized pulse pattern
- 24: harmonic
- 26: converter output magnitude
- 28: secondary side
- 30: transformer output voltage
- 32: primary side
- 34: transformer output magnitude
- 36: threshold magnitude
- 38: subconverter
- 40: generator
- 42: secondary winding system
- 44: primary winding system
- 46: active rectifier
- 48: DC link
- 50: inverter
- 52: disconnector
- 54: dv/dt filter
- 56: dv/dt filter
- 58: disconnector
- 60: disconnector
- 62: wind turbine
- 66: lower frequency range
- 68: higher frequency range

## Claims

1. An electrical converter system (10), comprising:
an electrical converter (12) for converting an input voltage into a converter output voltage (20);
a transformer (14) interconnected with the electrical converter (12) at a secondary side (28) and for transforming the converter output voltage (20) into a transformer output voltage (30) at a primary side (32);
a controller (16) adapted for switching the electrical converter (12) with optimized pulse patterns (22), such that the electrical converter (12) produces the converter output voltage (20) with a fundamental frequency and a series of harmonics (24);
wherein, between the secondary side (28) and the primary side (32), the transformer (14) has a frequency damping behaviour like a low pass filter;
**characterized in that**
the optimized pulse patterns (22) are optimized such that the converter output magnitudes (26) of harmonics (24) in an upper frequency range (68) are higher than those of harmonics (24) in a lower frequency range (66) and such that the converter output magnitudes (26) of the harmonics (24) in the upper frequency range (68) at the secondary side (28) are higher than predefined threshold magnitudes (36, 36a, 36b) for the harmonics (24) in the upper frequency range (68) and transformer output magnitudes (34) of the harmonics (24) in the upper frequency range (68) at the primary side (32), which are damped by the transformer (14), are lower than the predefined threshold magnitudes (36, 36a, 36b).

2. The electrical converter system (10) of claim 1,
wherein, for each harmonic (24) in the upper frequency range (68), a difference between the transformer output magnitude (34) and the threshold magnitude (36b) is smaller than 5 % or 1 % of the transformer output magnitude.

3. The electrical converter system (10) of claim 1 or 2,
wherein the converter output voltage (20) is a multi-phase converter output voltage, wherein the transformer (14) has at least two secondary winding systems (42) and one primary winding system (44), wherein the secondary winding systems (42) are phase shifted with each other; wherein the electrical converter (12) is connected to the at least two secondary winding systems (42) of the transformer (14) and a first set of harmonics (24) in the multi-phase converter output voltage (20) cancel each other in the secondary side (28) of the transformer (14) due to the phase shifted secondary winding systems (42); and wherein only specific harmonics (24) not cancelled in the secondary side (28) of the transformer (14) are optimized by the transformer frequency damping behaviour.

4. The electrical converter system (10) of one of the preceding claims,
wherein the electrical converter (12) is a 12-pulse converter; and/or
wherein the transformer (14) is a 12-pulse transformer.

5. The electrical converter system (10) of one of claims 1 or 2,
wherein the converter output voltage (20) is a multi-phase converter output voltage; wherein the transformer (14) has an open secondary winding system (42) with phases electrically isolated from each other; wherein the electrical converter (12) is connected to the secondary winding system (42) of the transformer (14) and the controller (16) is adapted to switch the electrical converter (12), such that harmonics (24) in the multi-phase converter output voltage (20) are reduced by additional voltage levels; wherein only specific harmonics (24) not cancelled in the secondary side (28) by the open winding system of the transformer (14) are optimized by the transformer frequency damping behaviour.

6. The electrical converter system (10) of one of claims 3 to 5,
wherein harmonics (24) with a multiple of 6k±1 of the fundamental frequency cancel each other in the secondary side (28), where k is an uneven natural number.

7. The electrical converter system (10) of one of the preceding claims,
wherein specific harmonics (24), which magnitudes (26) are optimized to the transformer damping behaviour, are a multiple of 6k±1 of the fundamental frequency, where k is an even natural number.

8. The electrical converter system (10) of one of the preceding claims,
wherein the electrical converter (12) comprises two subconverters (38) connected in parallel to the secondary side (28) of the transformer (14); and/or
wherein the controller (16) is adapted to switch the subconverters, (38) such that their output voltages are phase shifted by 30°.

9. The electrical converter system (10) of claim 8,
wherein each subconverter (38) comprises a rectifier (46), a DC link (48) and a transformer side inverter (50).

10. The electrical converter system (10) of claim 8, wherein the electrical converter (12) comprises two transformer side inverters (50) connected in parallel to a common DC link (48), which is connected to a common rectifier (46).

11. A method for generating an output voltage (30) with a specific harmonic distortion, the method comprising:
switching an electrical converter (12) with optimized pulse patterns (22), such that the electrical converter (12) produces a converter output voltage (20) with a fundamental frequency and a series of harmonics (24) having specific converter output magnitudes (26);
supplying the converter output voltage (20) to a transformer (14), which transforms the converter output voltage (20) into the output voltage (30) and which has a frequency damping behaviour like a low pass filter between the secondary side (28) and the primary side (32), thus damping converter output magnitudes (26) of harmonics (24) in an upper frequency range (68) stronger than in a lower frequency range (66);
**characterized in that** the optimized pulse patterns (22) are optimized, such that the converter output magnitudes (26) of harmonics (24) in the upper frequency range (68) are higher than those of harmonics (24) in the lower frequency range (66) and such that converter output magnitudes (26) of harmonics (24) in the upper frequency range (68) at the secondary side (28) of the transformer (14) are higher than predefined threshold magnitudes (36, 36a, 36b) for the specific frequencies (24) and transformer output magnitudes (34) of the harmonics (24) in the upper frequency range (68) at the primary side (32) of the transformer (14) are lower than the predefined threshold magnitudes (36, 36a, 36b).

12. The method of claim 11,
wherein the converter output voltage (20) is a multi-phase converter output voltage, wherein the transformer (14) has at least two secondary winding systems (42) and one primary winding system (44), wherein the secondary winding systems (42) are phase shifted with each other; wherein the electrical converter (12) is connected to the at least two secondary winding systems (42) of the transformer (14) and a first set of harmonics (24) in a multi-phase converter output voltage (20) cancel each other in the secondary side (28) of the transformer (14) due to the phase shifted secondary winding systems (42); and wherein only specific harmonics (24) not cancelled in the secondary side (28) of the transformer (14) are optimized by the transformer frequency damping behaviour.

13. The method of claim 11,
wherein the converter output voltage (20) is a multi-phase converter output voltage; wherein the transformer (14) has an open secondary winding system (42) with phases electrically isolated from each other; wherein the electrical converter (12) is connected to the secondary winding system (42) of the transformer (14) and the controller (16) is adapted to switch the electrical converter (12), such that harmonics (24) in the multi-phase converter output voltage (20) are reduced by additional voltage levels; wherein only specific harmonics (24) not cancelled in the secondary side (28) by the open winding system of the transformer (14) are optimized by the transformer frequency damping behaviour.

## Patentansprüche

1. Elektrisches Umrichtersystem (10), umfassend:
einen elektrischen Umrichter (12) zum Umwandeln einer Eingangsspannung in eine Umrichterausgangsspannung (20) ;
einen Transformator (14), der auf einer Sekundärseite (28) mit dem elektrischen Umrichter (12) verbunden ist und der geeignet ist zum Transformieren der Umrichterausgangsspannung (20) in eine Transformatorausgangsspannung (30) auf einer Primärseite (32) ;
eine Steuereinheit (16), die geeignet ist zum Umschalten des elektrischen Umrichters (12) mit optimierten Pulsmustern (22), sodass der elektrische Umrichter (12) die Umrichterausgangsspannung (20) mit einer Grundfrequenz und einer Reihe von Oberwellen (24) erzeugt;
wobei der Transformator (14) zwischen der Sekundärseite (28) und der Primärseite (32) ein Frequenzdämpfungsverhalten wie ein Tiefpassfilter aufweist;
**dadurch gekennzeichnet, dass** die optimierten Pulsmuster (22) so optimiert werden, dass die Umrichterausgangsgrößen (26) der Oberwellen (24) in einem oberen Frequenzbereich (68) größer als jene der Oberwellen (24) in einem unteren Frequenzbereich (66) sind und dass die Umrichterausgangsgrößen (26) der Oberwellen (24) in dem oberen Frequenzbereich (68) auf der Sekundärseite (28) größer als vordefinierte Schwellenwertgrößen (36, 36a, 36b) für die Oberwellen (24) in dem oberen Frequenzbereich (68) sind und dass die Transformatorausgangsgrößen (34) der Oberwellen (24) in einem oberen Frequenzbereich (68) auf der Primärseite (32), die durch den Transformator (14) gedämpft werden, niedriger als die vordefinierten Schwellenwertgrößen (36, 36a, 36b) sind.

2. Elektrisches Umrichtersystem (10) nach Anspruch 1,
wobei, für jede Oberwelle (24) in dem oberen Frequenzbereich (68), eine Differenz zwischen der Transformatorausgangsgröße (34) und der Schwellenwertgröße (36b) kleiner als 5% oder 1% der Transformatorausgangsgröße ist.

3. Elektrisches Umrichtersystem (10) nach Anspruch 1 oder 2,
wobei die Umrichterausgangsspannung (20) eine mehrphasige Umrichterausgangsspannung ist, wobei der Transformator (14) mindestens zwei Sekundärwicklungssysteme (42) und ein Primärwicklungssystem (44) aufweist, wobei die Sekundärwicklungssysteme (42) untereinander phasenverschoben sind; wobei der elektrische Umrichter (12) mit den mindestens zwei Sekundärwicklungssystemen (42) des Transformators (14) verbunden ist, und wobei sich eine erste Gruppe von Oberwellen (24) in der mehrphasigen Umrichterausgangsspannung (20) auf der Sekundärseite (28) des Transformators (14) aufgrund der phasenverschobenen Sekundärwicklungssysteme (42) gegenseitig auslöschen; und wobei nur spezifische Oberwellen (24), die nicht auf der Sekundärseite (28) des Transformators (14) ausgelöscht werden, durch das Transformatorfrequenzdämpfungsverhalten optimiert werden.

4. Elektrisches Umrichtersystem (10) nach einem der vorhergehenden Ansprüche,
wobei der elektrische Umrichter (12) ein 12-Puls-Umrichter ist; und/oder
wobei der Transformator (14) ein 12-Puls-Transformator ist.

5. Elektrisches Umrichtersystem (10) nach einem der Ansprüche 1 oder 2,
wobei die Umrichterausgangsspannung (20) eine mehrphasige Umrichterausgangsspannung ist; wobei der Transformator (14) ein offenes Sekundärwicklungssystem (42) mit elektrisch voneinander isolierten Phasen aufweist; wobei der elektrische Umrichter (12) mit dem Sekundärwicklungssystem (42) des Transformators (14) verbunden ist, und wobei die Steuereinheit (16) geeignet ist zum Umschalten des elektrischen Umrichters (12), sodass die Oberwellen (24) in der mehrphasigen Umrichterausgangsspannung (20) um zusätzliche Spannungspegel reduziert werden; wobei nur spezifische Oberwellen (24), die auf der Sekundärseite (28) nicht durch das offene Wicklungssystem des Transformators (14) ausgelöscht werden, durch das Transformatorfrequenzdämpfungsverhalten optimiert werden.

6. Elektrisches Umrichtersystem (10) nach einem der Ansprüche 3 bis 5,
wobei sich die Oberwellen (24) mit einem Vielfachen von 6k ± 1 der Grundfrequenz auf der Sekundärseite (28) gegenseitig auslöschen, wobei k eine ungerade natürliche Zahl ist.

7. Elektrisches Umrichtersystem (10) nach einem der vorhergehenden Ansprüche,
wobei spezifische Oberwellen (24), deren Größen (26) durch das Transformatordämpfungsverhalten optimiert werden, ein Vielfaches von 6k ± 1 der Grundfrequenz sind, wobei k eine ungerade natürliche Zahl ist.

8. Elektrisches Umrichtersystem (10) nach einem der vorhergehenden Ansprüche,
wobei der elektrische Umrichter (12) zwei Teilumrichter (38) umfasst, die parallel zur Sekundärseite (28) des Transformators (14) geschaltet sind; und/oder
wobei die Steuereinheit (16) geeignet ist zum Umschalten der Teilumrichter (38), sodass ihre Ausgangsspannungen um 30° phasenverschoben sind.

9. Elektrisches Umrichtersystem (10) nach Anspruch 8,
wobei jeder Teilumrichter (38) einen Gleichrichter (46), einen Zwischenkreis (48) und einen transformatorseitigen Wechselrichter (50) umfasst.

10. Elektrisches Umrichtersystem (10) nach Anspruch 8,
wobei der elektrische Umrichter (12) zwei transformatorseitige Wechselrichter (50) umfasst, die parallel zu einem gemeinsamen Zwischenkreis (48) geschaltet sind, der mit einem gemeinsamen Gleichrichter (46) verbunden ist.

11. Verfahren zum Erzeugen einer Ausgangsspannung (30) mit einer spezifischen harmonischen Verzerrung, wobei das Verfahren umfasst:
Umschalten eines elektrischen Umrichters (12) mit optimierten Pulsmustern (22), sodass der elektrische Umrichter (12) eine Umrichterausgangsspannung (20) mit einer Grundfrequenz und einer Reihe von Oberwellen (24) erzeugt, die spezifische Umrichterausgangsgrößen (26) aufweisen,
Bereitstellen der Umrichterausgangsspannung (20) für einen Transformator (14), der die Umrichterausgangsspannung (20) in die Ausgangsspannung (30) transformiert und der ein Frequenzdämpfungsverhalten wie ein Tiefpassfilter zwischen der Sekundärseite (28) und der Primärseite (32) aufweist, somit sind die dämpfenden Umrichterausgangsgrößen (26) der Oberwellen (24) in einem oberen Frequenzbereich (68) stärker als in einem unteren Frequenzbereich (66);
**dadurch gekennzeichnet, dass** die optimierten Pulsmuster (22) so optimiert werden, dass die Umrichterausgangsgrößen (26) der Oberwellen (24) in dem oberen Frequenzbereich (68) größer als jene der Oberwellen (24) in dem unteren Frequenzbereich (66) sind und dass die Umrichterausgangsgrößen (26) von Oberwellen (24) in dem oberen Frequenzbereich (68) auf der Sekundärseite (28) des Transformators (14) größer als vordefinierte Schwellenwertgrößen (36, 36a, 36b) für die spezifischen Frequenzen (24) sind und dass die Transformatorausgangsgrößen (34) der Oberwellen (24) in dem oberen Frequenzbereich (68) auf der Primärseite (32) des Transformators (14) niedriger als die vordefinierten Schwellenwertgrößen (36, 36a, 36b) sind.

12. Verfahren nach Anspruch 11,
wobei die Umrichterausgangsspannung (20) eine mehrphasige Umrichterausgangsspannung ist, wobei der Transformator (14) mindestens zwei Sekundärwicklungssysteme (42) und ein Primärwicklungssystem (44) aufweist, wobei die Sekundärwicklungssysteme (42) untereinander phasenverschoben sind; wobei der elektrische Umrichter (12) mit den mindestens zwei Sekundärwicklungssystemen (42) des Transformators (14) verbunden ist, und wobei sich eine erste Gruppe von Oberwellen (24) in einer mehrphasigen Umrichterausgangsspannung (20) auf der Sekundärseite (28) des Transformators (14) aufgrund der phasenverschobenen Sekundärwicklungssysteme (42) gegenseitig auslöschen; und wobei nur spezifische Oberwellen (24), die nicht auf der Sekundärseite (28) des Transformators (14) ausgelöscht werden, durch das Transformatorfrequenzdämpfungsverhalten optimiert werden.

13. Verfahren nach Anspruch 11,
wobei die Umrichterausgangsspannung (20) eine mehrphasige Umrichterausgangsspannung ist; wobei der Transformator (14) ein offenes Sekundärwicklungssystem (42) mit elektrisch voneinander isolierten Phasen aufweist; wobei der elektrische Umrichter (12) mit dem Sekundärwicklungssystem (42) des Transformators (14) verbunden ist, und wobei die Steuereinheit (16) geeignet ist zum Umschalten des elektrischen Umrichters (12) sodass die Oberwellen (24) in der mehrphasigen Umrichterausgangsspannung (20) um zusätzliche Spannungspegel reduziert werden; wobei nur spezifische Oberwellen (24), die auf der Sekundärseite (28) nicht durch das offene Wicklungssystem des Transformators (14) ausgelöscht werden, durch das Transformatorfrequenzdämpfungsverhalten optimiert werden.

## Revendications

1. Système de convertisseur électrique (10), comprenant :
un convertisseur électrique (12) pour convertir une tension d'entrée en une tension de sortie de convertisseur (20) ;
un transformateur (14) interconnecté au convertisseur électrique (12) au niveau d'un côté secondaire (28) et pour transformer la tension de sortie de convertisseur (20) en une tension de sortie de transformateur (30) au niveau d'un côté primaire (32) ;
un contrôleur (16) conçu pour commuter le convertisseur électrique (12) avec des configurations d'impulsions optimisées (22) de telle sorte que le convertisseur électrique (12) produise la tension de sortie de convertisseur (20) avec une fréquence fondamentale et une série d'harmoniques (24) ;
dans lequel, entre le côté secondaire (28) et le côté primaire (32), le transformateur (14) présente un comportement d'amortissement de fréquence tel qu'un filtre passe-bas ;
**caractérisé en ce que**
les configurations d'impulsions optimisées (22) sont optimisées de telle sorte que les amplitudes de sortie de convertisseur (26) d'harmoniques (24) dans une plage de fréquences supérieures (68) soient supérieures à celles d'harmoniques (24) dans une plage de fréquences inférieures (66) et de telle sorte que les amplitudes de sortie de convertisseur (26) d'harmoniques (24) dans la plage de fréquences supérieures (68) au niveau du côté secondaire (28) soient supérieures à des amplitudes de seuil prédéfinies (36, 36a, 36b) pour les harmoniques (24) dans la plage de fréquences supérieures (68) et que des amplitudes de sortie de transformateur (34) des harmoniques (24) dans la plage de fréquences supérieures (68) au niveau du côté primaire (32), qui sont amorties par le transformateur (14), soient inférieures aux amplitudes de seuil prédéfinies (36, 36a, 36b).

2. Système de convertisseur électrique (10) selon la revendication 1,
dans lequel, pour chaque harmonique (24) dans la plage de fréquences supérieures (68), une différence entre l'amplitude de sortie de transformateur (34) et l'amplitude de seuil (36b) est inférieure à 5 % ou à 1 % de l'amplitude de sortie de transformateur.

3. Système de convertisseur électrique (10) selon la revendication 1 ou 2,
dans lequel la tension de sortie de convertisseur (20) est une tension de sortie de convertisseur polyphasée, dans lequel le transformateur (14) comporte au moins deux systèmes d'enroulements secondaires (42) et un système d'enroulement primaire (44), dans lequel les systèmes d'enroulements secondaires (42) sont déphasés les uns par rapport aux autres ; dans lequel le convertisseur électrique (12) est connecté auxdits au moins deux systèmes d'enroulements secondaires (42) du transformateur (14) et un premier ensemble d'harmoniques (24) dans la tension de sortie de convertisseur polyphasée (20) s'annulent mutuellement dans le côté secondaire (28) du transformateur (14) en raison des systèmes d'enroulements secondaires déphasés (42) ; et dans lequel seules des harmoniques spécifiques (24) non annulés dans le côté secondaire (28) du transformateur (14) sont optimisés par le comportement d'amortissement de fréquence du transformateur.

4. Système de convertisseur électrique (10) selon l'une des revendications précédentes,
dans lequel le convertisseur électrique (12) est un convertisseur à 12 impulsions ; et/ou
dans lequel le transformateur (14) est un transformateur à 12 impulsions.

5. Système de convertisseur électrique (10) selon l'une des revendications 1 ou 2,
dans lequel la tension de sortie de convertisseur (20) est une tension de sortie de convertisseur polyphasée ; dans lequel le transformateur (14) comporte un système d'enroulement secondaire ouvert (42) présentant des phases électriquement isolées les unes des autres ; dans lequel le convertisseur électrique (12) est connecté au système d'enroulement secondaire (42) du transformateur (14) et le contrôleur (16) est conçu pour commuter le convertisseur électrique (12) de telle sorte que des harmoniques (24) dans la tension de sortie de convertisseur polyphasée (20) soient réduits de niveaux de tension supplémentaires ; dans lequel seules des harmoniques spécifiques (24) non annulés du côté secondaire (28) par le système d'enroulement ouvert du transformateur (14) sont optimisés par le comportement d'amortissement de fréquence du transformateur.

6. Système de convertisseur électrique (10) selon l'une des revendications 3 ou 5,
dans lequel des harmoniques (24) présentant un multiple de 6k±1 fois la fréquence fondamentale s'annulent mutuellement dans le côté secondaire (28), où k est un nombre naturel impair.

7. Système de convertisseur électrique (10) selon l'une des revendications précédentes,
dans lequel des harmoniques spécifiques (24), dont les amplitudes (26) sont optimisées pour le comportement d'amortissement du transformateur, sont un multiple de 6k±1 fois la fréquence fondamentale, où k est un nombre naturel pair.

8. Système de convertisseur électrique (10) selon l'une des revendications précédentes,
dans lequel le convertisseur électrique (12) comprend deux sous-convertisseurs (38) connectés en parallèle au côté secondaire (28) du transformateur (14) ; et/ou dans lequel le contrôleur (16) est conçu pour commuter les sous-convertisseurs (38) de telle sorte que leurs tensions de sortie soient déphasées de 30°.

9. Système de convertisseur électrique (10) selon la revendication 8,
dans lequel chaque sous-convertisseur (38) comprend un redresseur (46), une liaison DC (48) et un onduleur côté transformateur (50).

10. Système de convertisseur électrique (10) selon la revendication 8,
dans lequel le convertisseur électrique (12) comprend deux onduleurs côté transformateur (50) connectés en parallèle à une liaison DC commune (48), qui est connectée à un redresseur commun (46).

11. Procédé pour générer une tension de sortie (30) présentant une distorsion harmonique spécifique, le procédé comprenant :
la commutation d'un convertisseur électrique (12) avec des configurations d'impulsions optimisées (22) de telle sorte que le convertisseur électrique (12) produise une tension de sortie de convertisseur (20) avec une fréquence fondamentale et une série d'harmoniques (24) ayant des amplitudes de sortie de convertisseur spécifiques (26) ;
la fourniture de la tension de sortie de convertisseur (20) à un transformateur (14), qui transforme la tension de sortie de convertisseur (20) en la tension de sortie (30) et qui présente un comportement d'amortissement de fréquence tel qu'un filtre passe-bas entre le côté secondaire (28) et le côté primaire (32), amortissant ainsi les amplitudes de sortie de convertisseur (26) d'harmoniques (24) dans une plage de fréquences supérieures (68) plus fortement que dans une plage de fréquences inférieures (66) ;
**caractérisé en ce que** les configurations d'impulsions optimisées (22) sont optimisées de telle sorte que les amplitudes de sortie de convertisseur (26) d'harmoniques (24) dans la plage de fréquences supérieures (68) soient supérieures à celles d'harmoniques (24) dans la plage de fréquences inférieures (66) et de telle sorte que les amplitudes de sortie de convertisseur (26) d'harmoniques (24) dans la plage de fréquences supérieures (68) au niveau du côté secondaire (28) du transformateur (14) soient supérieures à des amplitudes de seuil prédéfinies (36, 36a, 36b) pour les fréquences spécifiques (24) et que des amplitudes de sortie de transformateur (34) des harmoniques (24) dans la plage de fréquences supérieures (68) au niveau du côté primaire (32) du transformateur (14) soient inférieures aux amplitudes de seuil prédéfinies (36, 36a, 36b).

12. Procédé selon la revendication 11,
dans lequel la tension de sortie de convertisseur (20) est une tension de sortie de convertisseur polyphasée, dans lequel le transformateur (14) comporte au moins deux systèmes d'enroulements secondaires (42) et un système d'enroulement primaire (44), dans lequel les systèmes d'enroulements secondaires (42) sont déphasés les uns par rapport aux autres ; dans lequel le convertisseur électrique (12) est connecté auxdits au moins deux systèmes d'enroulements secondaires (42) du transformateur (14) et un premier ensemble d'harmoniques (24) dans une tension de sortie de convertisseur polyphasée (20) s'annulent mutuellement dans le côté secondaire (28) du transformateur (14) en raison des systèmes d'enroulements secondaires déphasés (42) ; et dans lequel seules des harmoniques spécifiques (24) non annulés dans le côté secondaire (28) du transformateur (14) sont optimisés par le comportement d'amortissement de fréquence du transformateur.

13. Procédé selon la revendication 11,
dans lequel la tension de sortie de convertisseur (20) est une tension de sortie de convertisseur polyphasée ; dans lequel le transformateur (14) comporte un système d'enroulement secondaire ouvert (42) présentant des phases électriquement isolées les unes des autres ; dans lequel le convertisseur électrique (12) est connecté au système d'enroulement secondaire (42) du transformateur (14) et le contrôleur (16) est conçu pour commuter le convertisseur électrique (12) de telle sorte que des harmoniques (24) dans la tension de sortie de convertisseur polyphasée (20) soient réduits de niveaux de tension supplémentaires ; dans lequel seules des harmoniques spécifiques (24) non annulés du côté secondaire (28) par le système d'enroulement ouvert du transformateur (14) sont optimisés par le comportement d'amortissement de fréquence du transformateur.
